# EUROPÄISCHE PATENTSCHRIFT

(11) **EP 2 907 776 B1**
(45) Veröffentlichungstag und Bekanntmachung des Hinweises auf die Patenterteilung: **05.04.2017**
(21) Anmeldenummer: 15000045.3
(22) Anmeldetag: 12.01.2015
(51) Int. Cl.: B65G 39/071

(54) **Transportvorrichtung mit einem endlosen bandförmigen Transportelement**
Transport device with an endless belt-shaped transport element
Dispositif de transport doté d'élément de transport stratiforme sans fin

(30) Priorität: 18.02.2014 DE 102014002360
(43) Veröffentlichungstag der Anmeldung: 19.08.2015
(73) Patentinhaber: BEUMER GmbH & Co. KG, 59269 Beckum (DE)
(72) Erfinder: Heino, Heitplatz, 48317 Drensteinfurt (DE); Schäfer, Philipp, 33142 Büren (DE)
(74) Vertreter: Philipp, Matthias

(56) Entgegenhaltungen:
- DE-C- 867 517
- GB-A- 205 017
- GB-A- 1 154 465
- JP-A- H07 144 737
- US-A- 2 686 590

## Beschreibung

Die Erfindung betrifft eine Transportvorrichtung nach dem Oberbegriff des Anspruchs 1 mit einem endlosen bandförmigen Transportelement, das über mehrere rotierende Umlenkrollen in einer Förderrichtung umlaufend geführt ist, wobei zwischen einer ersten und einer zweiten Umlenkrolle ein Transportabschnitt gebildet ist, in dem von dem Transportelement Fördergut aufnehm- und transportierbar ist, beispielsweise in Form eines Gurtförderers mit einem Fördergurt, dessen Breite in Bezug auf seine Länge relativ groß ist.

Eine derartige Transportvorrichtung ist bereits aus GB 1 154 465 A bekannt. Die Aufgabe der Erfindung besteht darin, das Lenkverhalten insbesondere von relativ kurzen Gurtförderern zu verbessern, beispielsweise von Gurtförderern, die zur Einschleusung von Stückgut auf Sortierförderer verwendet werden. Diese Art von Gurtförderern zeigt häufig schlechte Geradeauslaufeigenschaften des Gurts, wobei dieser dazu neigt, zu einer Seite quer zur Förderrichtung zu verlaufen.

Erfindungsgemäß wird diese Aufgabe bei einer Transportvorrichtung mit den Merkmalen von Anspruch 1 gelöst.

Eine derartige Kombination einer konvexen Umlenkrolle mit einer konkaven Umlenkrolle, von denen mindestens eine antreibbar sein kann, ermöglicht eine Zentrierwirkung des umlaufenden Transportelements aufgrund der konvexen Form der ersten Umlenkrolle, und gleichzeitig eine über die Breite des Transportelements gesehen wenigstens teilweise ausgeglichene Längsspannung des Transportelements, im Vergleich zu einer Anordnung mit zwei konvexen Umlenkrollen oder einer konvexen und einer zylindrischen Umlenkrolle.

Zweckmäßigerweise ist vorgesehen, dass die Drehachsen der ersten und zweiten Umlenkrolle parallel zueinander sind. Die Drehachsen können auf gleicher Höhe anbeordnet sein, so dass der Transportabschnitt im Wesentlichen horizontal verläuft, oder in unterschiedlicher Höhe, so dass der Transportabschnitt in Förderrichtung gesehen ansteigend oder abfallend verläuft.

Es kann vorgesehen sein, dass wenigstens eine Außenmantelfläche einen knickfreien bogenförmigen Konturverlauf aufweist. Der Konturverlauf kann kreisbogenförmig, elliptisch oder parabelförmig sein. In aller Regel sind die Außenmantelflächen symmetrisch zur jeweiligen Mittelebene.

Insbesondere kann vorgesehen sein, dass wenigstens eine Außenmantelfläche einen zentralen zylindrischen Abschnitt und beidseitig benachbarte konische oder konkav oder konvex geformte Abschnitte aufweist.

In einer Ausführungsform kann vorgesehen sein, dass wenigstens eine Außenmantelfläche zwei aneinander grenzende konusförmige Abschnitte aufweist.

Bevorzugt ist vorgesehen, dass die konvexe Außenmantelfläche bezüglich einer konzentrischen zylindrischen ersten Referenzfläche mit einem ersten Referenzradius örtliche erste Radiusdifferenzen aufweist, die betragsmäßig mit örtlichen zweiten Radiusdifferenzen der konkaven Außenmantelfläche bezüglich einer konzentrischen zylindrischen zweiten Referenzfläche mit einem zweiten Referenzradius übereinstimmen, wobei der erste Referenzradius der Radius der ersten Umlenkrolle in einem Abstand einer halben Breite des Transportelements von der Mittelebene ist, und der zweite Referenzradius der Radius der zweiten Umlenkrolle in einem Abstand einer halben Breite des Transportelements von der Mittelebene ist. Alternativ kann als erster und zweiter Referenzradius der Radius der ersten bzw. zweiten Umlenkrolle an der Mittelebene gewählt werden. Bei einer derartigen Ausführung sind die Umlenkrollen gleich stark konvex und konkav geformt, oder die konvexe Außenmantelfläche ist bezüglich eines örtlichen Radius komplementär zu der konkaven Außenmantelfläche ausgebildet. Bei einer solchen Ausführung besteht der Vorteil, dass das Transportelement über seine Breite eine konstante örtliche Längsspannung aufweist, da konvexe Bereiche der ersten Umlenkrolle durch gegenüberliegende konkave Bereiche der zweiten Umlenkrolle kompensiert sind.

Zur Verbesserung der Zentrierwirkung kann eine nur teilweise Kompensation der konvexen Bereiche der ersten Umlenkrolle vorgesehen sein, indem die konvexe Außenmantelfläche bezüglich einer konzentrischen zylindrischen Referenzfläche mit einem ersten Referenzradius erste örtliche Durchmesserdifferenzen aufweist, die betragsmäßig größer sind als zweite örtliche Radiusdifferenzen der konkaven Außenmantelfläche bezüglich einer konzentrischen zylindrischen Referenzfläche mit einem zweiten Referenzradius, oder mit anderen Worten mit einer stärker konvexen als konkaven Ausbildung der Umlenkrollen. Hierbei kann vorgesehen sein, dass die zweiten örtlichen Radiusdifferenzen mindestens 10%, 50% oder 90% der ersten örtlichen Radiusdifferenzen betragen, so dass die Konvexität der ersten Umlenkrolle zu mindestens 10%, 50% oder 90% durch die Konkavität der zweiten Umlenkrolle kompensiert ist.

Das Transportelement kann eine Breite aufweisen, die mindestens 150%, 200%, 250% oder 350% eines Achsabstands zwischen der ersten und zweiten Umlenkrolle beträgt.

Die Erfindung wird nachfolgend anhand mehrerer Ausführungsbeispiele erläutert, wobei auf eine Zeichnung Bezug genommen ist, in der
Fig. 1 eine schematische Draufsicht auf eine erste Ausführungsform einer erfindungsgemäßen Transportvorrichtung zeigt,
Fig. 2 eine schematische Draufsicht auf eine zweite Ausführungsform einer erfindungsgemäßen Transportvorrichtung zeigt, und
Fig. 3 eine schematische Draufsicht auf eine dritte Ausführungsform der erfindungsgemäßen Transportvorrichtung zeigt.

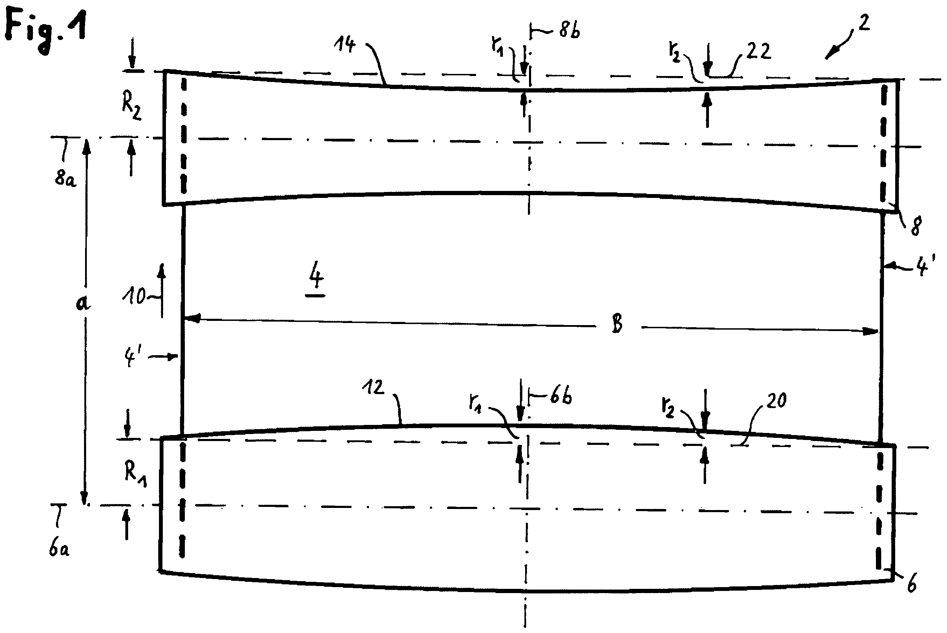

Fig. 1 bis 3 zeigen schematische Draufsichten auf mehrere Ausführungsformen der Erfindung, die sich im Wesentlichen durch die konkrete Formgebung der konvexen bzw. konkaven Umlenkrollen unterscheiden.

Bei einer ersten Ausführungsform gemäß Fig. 1 umfasst eine im Ganzen mit 2 bezeichnete Transportvorrichtung ein endloses, bandförmiges Transportelement 4 in Form eines geringfügig elastischen Fördergurts. Das Transportelement 4 ist über eine erste Umlenkrolle 6 und eine zweite Umlenkrolle 8 in einer Förderrichtung 10 umlaufend geführt. Im Bereich der Umlenkrollen 6, 8 sind seitliche Ränder 4' des Transportelements 4 gestrichelt dargestellt.

Die erste Umlenkrolle 6 ist um eine Drehachse 6a freilaufend oder drehantreibbar rotierend gelagert, und die zweite Umlenkrolle 8 ist um eine Drehachse 8a in einem Achsabstand a von der Drehachse 6a freilaufend oder drehantreibbar rotierend gelagert. Die erste Umlenkrolle 6 weist eine konvexe Außenmantelfläche 12 auf, mit einem von einer senkrecht zu der Drehachse 6a verlaufenden Mittelebene 6b nach außen abnehmenden Durchmesser, und die zweite Umlenkrolle 8 weist eine konkave Außenmantelfläche 14 mit einem von einer senkrecht zu der Drehachse 8a verlaufenden Mittelebene 8b nach außen zunehmenden Durchmesser auf.

In Fig. 1 ist neben den konvexen bzw. konkaven Außenmantelflächen 12, 14 der Umlenkrollen 6, 8 noch eine erste und zweite zylindrische Referenzfläche 20, 22 dargestellt, die der Quantifizierung der Konvexität bzw. Konkavität der Umlenkrollen 6, 8 dienen. Ein erster Referenzradius R₁ als Radius der ersten zylindrischen Referenzfläche 20 ist so festgelegt, dass an den seitlichen Rändern 4'des Transportelements 4 der Radius der Referenzfläche 20 gleich dem örtlichen Radius der Außenmantelfläche 12 ist, während sich im Bereich der Mittelebene 6b eine größte Radiusabweichung ergibt. Entsprechendes gilt für die zweite Referenzfläche 22 mit einem zweiten Referenzradius R₂. In Fig. 1 sind beispielhaft örtliche Radiusdifferenzen r₁ im Bereich der Mittelebenen 6b, 8b und r₂ etwa in der Mitte zwischen der Mittelebene und einem seitlichen Rand 4' des Transportelements 4 angegeben. Bei der in der ersten Ausführungsform gewählten Formgebung der Umlenkrollen 6, 8 sind die örtlichen Radiusdifferenzen an gleichen Stellen der Umlenkrollen, beispielhaft verdeutlicht durch die Radiusdifferenzen r₁ und r₂ bei beiden Umlenkrollen 6, 8 betragsmäßig gleich groß, so dass die Konvexität der ersten Umlenkrolle 6 die Konkavität der zweiten Umlenkrolle 8 in dem Sinne vollständig kompensiert, dass das Transportelement 4 an jeder Stelle seiner Breitenerstreckung, quer zur Förderrichtung 10 gesehen, eine konstante Längsspannung, in Förderrichtung 10 wirkend, aufweist, vergleichbar mit einem Fall, in dem beide Umlenkrollen 6, 8 zylindrisch wären.

Alternativ könnten die Referenzflächen 20, 22 einen Referenzradius R₁, R₂ aufweisen, der dem Radius der jeweiligen Umlenkrolle 6, 8 an der Mittelebene 6b, 8b entspricht.

In einer Variante kann vorgesehen sein, dass die erste Umlenkrolle 6 stärker konvex ausgebildet ist als die zweite Umlenkrolle 8 konkav ausgebildet ist, wobei die erste, konvexe Umlenkrolle 6 bezüglich ihrer Referenzfläche größere Radiusdifferenzen aufweist als dies bei der zweiten Umlenkrolle bezüglich deren Referenzfläche der Fall ist, so dass sich keine vollständige Kompensation der Konvexität der ersten Umlenkrolle durch die Konkavität der zweiten Umlenkrolle ergibt und das Transportelement 4 in einem mittleren Bereich in der Nähe der Mittelebenen 6b, 8b stärker in Längsrichtung 10 gedehnt ist als im Bereich der seitlichen Ränder 4', wodurch die Zentrierwirkung begünstigt wird.

Umgekehrt besteht die Möglichkeit, die Konvexität der ersten Umlenkrolle 6 weniger groß auszubilden als die Konkavität der zweiten Umlenkrolle 8, wobei dann die Radiusdifferenzen der ersten Umlenkrolle 6 jeweils kleiner als entsprechende Radiusdifferenzen der zweiten Umlenkrolle 8 sind.

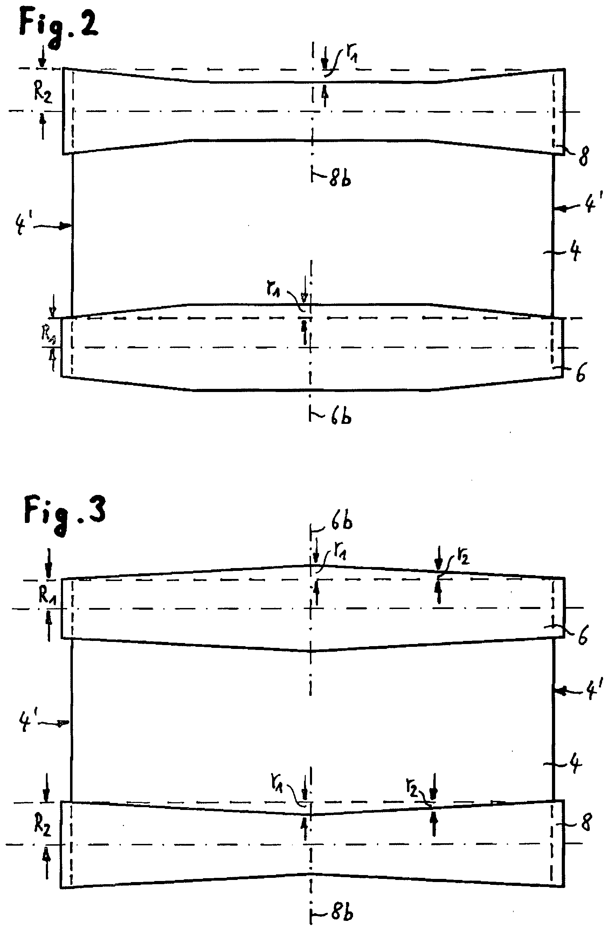

Fig. 2 zeigt eine weitere Ausführungsform einer erfindungsgemäßen Transportvorrichtung, bei der die Außenmantelflächen der beiden Umlenkrollen 6, 8 nicht kontinuierlich bogenförmig ausgeführt sind wie bei der ersten Ausführungsform, sondern aus einem zylindrischen mittleren Abschnitt und zwei stufenlos davon anschließenden, äußeren konusförmig erweiterten bzw. verjüngten Abschnitten bestehen.

Auch hier ist die Anordnung so getroffen, dass die konvexe Außenmantelfläche 12 der ersten Umlenkrolle 6 bezüglich einer konzentrischen zylindrischen ersten Referenzfläche 20 örtliche erste Radiusdifferenzen, beispielhaft verdeutlicht durch eine Radiusdifferenz r₁ im Bereich der Mittelebene 6b, aufweist, die betragsmäßig mit örtlichen zweiten Radiusdifferenzen der konkaven Außenmantelfläche 14 der zweiten Umlenkrolle 8 bezüglich einer konzentrischen zylindrischen zweiten Referenzfläche 22, ebenfalls verdeutlicht durch eine Radiusdifferenz r₁ im Bereich der Mittelebene 8b, übereinstimmen. Wiederum ist der erste Referenzradius R₁ der ersten Referenzfläche 20 der Radius der ersten Umlenkrolle 6 in einem Abstand einer halben Breite B des Tragelements 4 von der Mittelebene 6b, also an der Stelle des seitlichen Rands 4' des Tragelements 4, und der zweite Referenzradius R₂ der zweiten Referenzfläche 22 ist der Radius der zweiten Umlenkrolle 8 in einem Abstand einer halben Breite des Tragelements 4 von der Mittelebene 8b der zweiten Umlenkrolle 8, also ebenfalls an der Stelle eines Seitenrands 4' des Tragelements 4.

Auch diese Durchmessergestaltung der Umlenkrollen 6, 8 hat zur Folge, dass die örtliche Längsspannung des Tragelements 4 quer zur Förderrichtung 10 gesehen im Wesentlichen konstant ist.

Fig. 3 zeigt ein Ausführungsbeispiel mit Umlenkrollen, deren Außenmantelflächen jeweils aus zwei an der Mittelebene 6b bzw. 8b aneinandergrenzenden konusförmigen Abschnitten gebildet sind. Auch in diesem Falle sind die örtlichen Durchmesser der beiden Umlenkrollen 6, 8 so gestaltet, dass die Radiusdifferenzen r₁, r₂ bezüglich der zylindrischen Referenzflächen 20, 22 einander entsprechen und somit kompensieren. Auch in diesem Falle weist daher ein bandförmiges Transportelement 4, das im Ursprungszustand an jeder Breitenposition eine gleiche Umfangslänge hat, im auf die Umlenkrollen 6, 8 aufgelegten Zustand an jeder Breitenposition eine im Wesentlichen gleiche Längsspannung auf.

### Bezugszeichenliste

- 2: Transportvorrichtung
- 4: Tragelement
- 4': seitlicher Rand
- 6: erste Umlenkrolle
- 6a: Drehachse
- 6b: Mittelebene
- 8: zweite Umlenkrolle
- 8a: Drehachse
- 8b: Mittelebene
- 10: Förderrichtung
- 12: konvexe Außenmantelfläche
- 14: konkave Außenmantelfläche
- 20: erste zylindrische Referenzfläche
- 22: zweite zylindrische Referenzfläche

- a: Achsabstand (von 6, 8)
- B: Breite (von 4)
- R₁: erster Referenzradius (von 20)
- R₂: zweiter Referenzradius (von 22)
- r₁, r₂: Radiusdifferenzen

## Patentansprüche

1. Transportvorrichtung (2) mit einem endlosen bandförmigen Transportelement (4), das über mehrere rotierende Umlenkrollen (6, 8) in einer Förderrichtung (10) umlaufend geführt ist, wobei zwischen einer ersten Umlenkrolle (6) und einer zweiten Umlenkrolle (8) ein Transportabschnitt gebildet ist, in dem von dem Transportelement (4) Fördergut aufnehm- und transportierbar ist, wobei die erste Umlenkrolle (6) eine konvexe Außenmantelfläche (12) mit von einer senkrecht zu einer Drehachse (6a) der ersten Umlenkrolle (6) angeordneten Mittelebene (6b) nach außen abnehmendem Durchmesser und die zweite Umlenkrolle (8) eine konkave Außenmantelfläche (14) mit von einer senkrecht zu einer Drehachse (8a) der zweiten Umlenkrolle (8) angeordneten Mittelebene (8b) nach außen zunehmendem Durchmesser aufweist, **dadurch gekennzeichnet, dass** das Transportelement (4) eine konstante Breite (B) aufweist, die mindestens 150% eines Achsabstands (a) der ersten und zweiten Umlenkrolle (6, 8) entspricht.

2. Transportvorrichtung nach Anspruch 1, **dadurch gekennzeichnet, dass** wenigstens eine Außenmantelfläche (12, 14) einen knickfreien bogenförmigen Konturverlauf aufweist.

3. Transportvorrichtung nach Anspruch 2, **dadurch gekennzeichnet, dass** der Konturverlauf kreisbogenförmig, elliptisch oder parabelförmig ist.

4. Transportvorrichtung nach einem der vorangehenden Ansprüche, **dadurch gekennzeichnet, dass** wenigstens eine Außenmantelfläche (12, 14) einen zentralen zylindrischen Abschnitt und beidseitig benachbarte konische oder konkav oder konvex geformte Abschnitte aufweist.

5. Transportvorrichtung nach Anspruch 1, **dadurch gekennzeichnet, dass** wenigstens eine Außenmantelfläche (12, 14) zwei aneinandergrenzende konusförmige Abschnitte aufweist.

6. Transportvorrichtung nach einem der vorangehenden Ansprüche, **dadurch gekennzeichnet, dass** die konvexe Außenmantelfläche (12) bezüglich einer konzentrischen zylindrischen ersten Referenzfläche (20) mit einem Referenzdurchmesser (R₁) örtliche erste Radiusdifferenzen (r₁, r₂) aufweist, die betragsmäßig mit örtlichen zweiten Radiusdifferenzen (r₁, r₂) der konkaven Außenmantelfläche (14) bezüglich einer konzentrischen zylindrischen zweiten Referenzfläche (22) mit einem zweiten Referenzradius (R₂) übereinstimmen, wobei der erste Referenzradius (R₁) der Radius der ersten Umlenkrolle (6) in einem Abstand einer halben Breite (B) des Transportelements (4) von der Mittelebene (6b) ist, und der zweite Referenzradius (R₂) der Radius der zweiten Umlenkrolle (8) in einem Abstand einer halben Breite (B) des Transportelements (4) von der Mittelebene (8b) ist.

7. Transportvorrichtung nach einem der Ansprüche 1 bis 5, **dadurch gekennzeichnet, dass**
die konvexe Außenmantelfläche (12) bezüglich einer konzentrischen zylindrischen ersten Referenzfläche (20) mit einem Referenzdurchmesser (R₁) örtliche erste Radiusdifferenzen (r₁, r₂) aufweist, die betragsmäßig größer sind als örtliche zweite Radiusdifferenzen (r₁, r₂) der konkaven Außenmantelfläche (14) bezüglich einer konzentrischen zylindrischen zweiten Referenzfläche (22) mit einem zweiten Referenzradius (R₂), wobei der erste Referenzradius (R₁) der Radius der ersten Umlenkrolle (6) in einem Abstand einer halben Breite (B) des Transportelements (4) von der Mittelebene (6b) ist, und der zweite Referenzradius (R₂) der Radius der zweiten Umlenkrolle (8) in einem Abstand einer halben Breite (B) des Transportelements (4) von der Mittelebene (8b) ist.

8. Transportvorrichtung nach Anspruch 6, **dadurch gekennzeichnet, dass** das Transportelement (4) in Förderrichtung (10) eine örtliche Längsspannung aufweist, die über eine Breite (B) des Transportelements (4) gesehen konstant ist.

9. Transportvorrichtung nach einem der vorangehenden Ansprüche, **dadurch gekennzeichnet, dass** die Breite (B) mindestens 200%, 250% oder 350% eines Achsabstands (a) der ersten und zweiten Umlenkrolle (6, 8) beträgt.

## Claims

1. Transport device (2) with an endless belt-shaped transport element (4), which is guided circulating in a conveying direction (10) via a plurality of rotating return rollers (6,8), there being formed between a first return roller (6) and a second return roller (8) a transport section, in which articles to be conveyed can be picked up and transported by the transport element (4), wherein the first return roller (6) has a convex outer lateral surface (12) with a diameter that reduces outwards from a central plane (6b) arranged perpendicularly to an axis of rotation (6a) of the first return roller (6) and the second return roller (8) has a concave outer lateral surface (14) with a diameter that increases outwards from a central plane (8b) arranged perpendicularly to an axis of rotation (8a) of the second return roller (8), **characterized in that** the transport element (4) has a constant width (13), which corresponds to at least 150% of an axial distance (a) between the first and second return roller (6, 8).

2. Transport device according to claim 1, **characterized in that** at least one outer lateral surface (12, 14) has an arcuate contour shape free of sharp bends.

3. Transport device according to claim 2, **characterized in that** the contour shape is like the arc of a circle, elliptical or parabolic.

4. Transport device according to any one of the above claims, **characterized in that** at least one outer lateral surface (12, 14) has a central cylindrical section and sections adjacent to it on both sides with conical or concave or convex shapes.

5. Transport device according to claim 1, **characterized in that** at least one outer lateral surface (12, 14) has two conical sections adjacent to one another.

6. Transport device according to any one of the above claims, **characterized in that** relative to a concentric cylindrical first reference surface (20) with a reference diameter (R₁) the convex outer lateral surface (12) has local first radius differences (r₁, r₂), which are the same in magnitude as local second radius differences (r₁, r₂) in the concave outer lateral surface (14) relative to a concentric cylindrical second reference surface (22) with a second reference radius (R₂), wherein the first reference radius (R₁) is the radius of the first return roller (6) spaced half a width (B) of the transport element (4) away from the central plane (6b), and the second reference radius (R₂) is the radius of the second return roller (8) spaced half a width (B) of the transport element (4) away from the central plane (8b).

7. Transport device according to any one of claims 1 to 5, **characterized in that** the convex outer lateral surface (12) has local first radius differences (r₁, r₂) with respect to a concentric cylindrical first reference surface (20) with a reference diameter (R₁), which is greater in magnitude than local second radius differences (r₁, r₂) of the concave outer lateral surface (14) with respect to a concentric cylindrical second reference surface (22) with a second reference radius (R₂), wherein the first reference radius (R₁) is
the radius of the first return roller (6) spaced half a width (B) of the transport element (4) away from the central plane (6b), and the second reference radius (R₂) is the radius of the second return roller (8) spaced half a width (B) of the transport element (4) away from the central plane (8b).

8. Transport device according to claim 6, **characterized in that** the transport element (4) has a local longitudinal tension, seen in the conveying direction (10), which is constant over a width (B) of the transport element (4).

9. Transport device according to any one of the above claims, **characterized in that** the width (B) is at least 200%, 250% or 350% of an axial distance (a) between the first and second return roller (6, 8).

## Revendications

1. Dispositif de transport (2) avec un élément de transport en forme de courroie sans fin (4), qui est guidé à des fins de circulation dans une direction allant dans le sens du transport (10) par le biais d'une pluralité de rouleaux de renvoi rotatifs (6, 8), se trouvant là, formée entre un premier rouleau de renvoi (6) et un deuxième rouleau de renvoi (8), une section de transport, dans laquelle des articles devant être transportés peuvent être saisis et transportés par l'élément de transport (4), dans lequel le premier rouleau de renvoi (6) a une surface latérale extérieure convexe (12) ayant un diamètre qui va en se réduisant vers l'extérieur depuis un plan central (6b) se trouvant de manière perpendiculaire par rapport à un axe de rotation (6a) du premier rouleau de renvoi (6) et le deuxième rouleau de renvoi (8) a une surface latérale extérieure concave (14) ayant un diamètre qui va en augmentant vers l'extérieur depuis un plan central (8b) se trouvant de manière perpendiculaire par rapport à un axe de rotation (8a) du deuxième rouleau de renvoi (8), **caractérisé en ce que** l'élément de transport (4) a une largeur constante (B), qui correspond à au moins 150 % d'une distance axiale (a) entre les premier et deuxième rouleaux de renvoi (6, 8).

2. Dispositif de transport selon la revendication 1, **caractérisé en ce qu'**au moins une surface latérale extérieure (12, 4) a une forme de contour arquée exempte de coudes à petit rayon.

3. Dispositif de transport selon la revendication 2, **caractérisé en ce que** la forme de contour est similaire à l'arc d'un cercle, elliptique ou parabolique.

4. Dispositif de transport selon l'une quelconque des revendications précédentes, **caractérisé en ce qu'**au moins une surface latérale extérieure (12, 4) a une section cylindrique centrale et des sections adjacentes par rapport à celle-ci des deux côtés avec des formes coniques ou concaves ou convexes.

5. Dispositif de transport selon la revendication 1, **caractérisé en ce qu'**au moins une surface latérale extérieure (12, 14) a deux sections coniques adjacentes l'une par rapport à l'autre.

6. Dispositif de transport selon l'une quelconque des revendications précédentes, **caractérisé en ce que**, par rapport à une première surface de référence cylindrique concentrique (20) ayant un diamètre de référence (R₁), la surface latérale extérieure convexe (12) a des premières différences de rayon au niveau local (r₁, r₂), qui sont identiques en termes de magnitude par rapport aux deuxièmes différences de rayon au niveau local (r₁, r₂) dans la surface latérale extérieure concave (14) par rapport à une deuxième surface de référence cylindrique concentrique (22) avec un deuxième rayon de référence (R₂), dans lequel le premier rayon de référence (R₁) est le rayon du premier rouleau de renvoi (6) espacé d'une demi-largeur (B) de l'élément de transport (4) allant à l'opposé du plan central (6b), et le deuxième rayon de référence (R₂) est le rayon du deuxième rouleau de renvoi (8) espacé d'une demi-largeur (B) de l'élément de transport (4) allant à l'opposé du plan central (8b).

7. Dispositif de transport selon l'une quelconque des revendications 1 à 5, **caractérisé en ce que** la surface latérale extérieure convexe (12) a des premières différences de rayon au niveau local (r₁, r₂) par rapport à une première surface de référence cylindrique concentrique (20) ayant un diamètre de référence (R₁), qui est supérieur en termes de magnitude par rapport aux deuxièmes différences de rayon au niveau local (r₁, r₂) de la surface latérale extérieure concave (14) par rapport à une deuxième surface de référence cylindrique concentrique (22) avec un deuxième rayon de référence (R₂), dans lequel le premier rayon de référence (R₁) est le rayon du premier rouleau de renvoi (6) espacé d'une demi-largeur (B) de l'élément de transport (4) allant à l'opposé du plan central (6b), et le deuxième rayon de référence (R₂) est le rayon du deuxième rouleau de renvoi (8) espacé d'une demi-largeur (B) de l'élément de transport (4) allant à l'opposé du plan central (8b).

8. Dispositif de transport selon la revendication 6, **caractérisé en ce que** l'élément de transport (4) a une tension longitudinale locale, quand il est vu dans la direction allant dans le sens du transport (10), qui est constante par rapport à une largeur (B) de l'élément de transport (4).

9. Dispositif de transport selon l'une quelconque des revendications précédentes, **caractérisé en ce que** la largeur (B) fait au moins 200 %, 250 % ou 350 % d'une distance axiale (a) entre les premier et deuxième rouleaux de renvoi (6, 8).
